# EUROPEAN PATENT SPECIFICATION

(11) **EP 3 554 182 B1**
(45) Date of publication and mention of the grant of the patent: **12.05.2021**
(21) Application number: 16924038.9
(22) Date of filing: 13.12.2016
(51) Int. Cl.: H04W 76/28

(54) **METHODS AND APPARATUS FOR DISCONTINUOUS RECEPTION**
VERFAHREN UND VORRICHTUNGEN FÜR DISKONTINUIERLICHEN EMPFANG
PROCÉDÉS ET APPAREILS DESTINÉS À UNE RÉCEPTION DISCONTINUE

(43) Date of publication of application: 16.10.2019
(73) Proprietor: GUANGDONG OPPO MOBILE TELECOMMUNICATIONS CORP., LTD., Wusha, Chang'an Dongguan, Guangdong 523860 (CN)
(72) Inventor: LIN, Yanan, Dongguan Guangdong 523860 (CN)
(74) Representative: Manitz Finsterwald Patent- und Rechtsanwaltspartnerschaft mbB
(86) International application number: PCT/CN2016/109719
(87) International publication number: WO 2018/107369

(56) References cited:
- EP-A2- 2 654 353
- WO-A1-2015/028054
- CN-A- 101 669 288
- CN-A- 104 782 218
- US-A1- 2010 144 299
- US-A1- 2012 207 069
- US-A1- 2013 308 511
- "3GPP TS 36.321, V8.1.0, Medium Access Control Protocol Specification", 1 March 2008 (2008-03-01), 20080301, XP002521730, * the whole document *
- Amir C.: "LTE resource scheduling (7)-DRX discontinuous reception (1)", CSDN blog, 20 September 2016 (2016-09-20), pages 1-6, XP009515183, Retrieved from the Internet: URL:http://blog.csdn.net/m_052148/article/ details/52439789

## Description

### TECHNICAL FIELD

Embodiments of the present disclosure relates to the field of communication, and more particularly, to methods and apparatus for discontinuous reception.

### BACKGROUND

The transmission of packet-based data streams usually bursts. It is possible that data is transmitted between a network device and a terminal during a time period, but no data will be transmitted during a next long time period. During the period when no data is transmitted, the terminal may reduce its power consumption by stopping receiving the Physical Downlink Control Channel (PDCCH), thereby improving usage time of the terminal's battery. The communication method between the terminal and the network device as described in the above is discontinuous reception (DRX).

The transmission of packet-based data streams usually bursts. It is possible that data is transmitted between a network device and a terminal during a time period, but no data will be transmitted during a next long time period. During the period when no data is transmitted, the terminal may reduce its power consumption by stopping receiving the Physical Downlink Control Channel (PDCCH), thereby improving usage time of the terminal's battery. The communication method between the terminal and the network device as described in the above is discontinuous reception (DRX).

However, this periodic DRX working mechanism in the prior art makes the time period when the terminal is in an active mode and the time period when the terminal is in a sleeping mode relatively fixed, which reduces the flexibility of the terminal in communicating with the network device using the DRX working mechanism.

The features of the preamble of the independent claims are known from US2012207069A1, US2010144299A1, EP2654353A2, US2013308511A1, WO2015028054A1, and 3GPP TS 36.321, V8.1.0, Medium Access Control Protocol Specification.

### SUMMARY

It is an object of the invention to provide methods and apparatus for discontinuous reception to improve the flexibility of a terminal in communicating with a network device using DRX working mechanism. This object is solved by the subject-matter of the independent claims.

The methods and apparatus according to the present invention are defined in the independent claims, and the preferable features according to the present invention are defined in the dependent claims.

In a first aspect, there is provided a method for discontinuous reception, comprising: receiving, by a terminal, switch indication information sent by a network device and used to instruct the terminal to switch from a first discontinuous reception DRX pattern currently being used to a second DRX pattern, wherein each of the first DRX pattern and the second DRX pattern indicates a duration of a DRX sleeping period and a duration of a DRX active period; and switching, by the terminal, between the DRX sleeping period and the DRX active period with the second DRX pattern. wherein the duration of the DRX sleeping period and/or the duration of the DRX active period are determined based on at least one of the following: service quality or a service attribute corresponding to downlink data to be transmitted; time required for encoding uplink and/or downlink data; time required for decoding uplink and/or downlink data.

The terminal may switch the DRX pattern in real time based on the switch indication information of the network device and switch between the DRX sleeping period and the DRX active period with different DRX patterns, thereby improving the flexibility of the terminal in communicating with the network device using the DRX working mechanism.

In combination with the first aspect, in some implementations of the first aspect, the method further comprises: receiving, by the terminal, first indication information sent by the network device and indicating the second DRX pattern.

In combination with the first aspect, in some implementations of the first aspect, the method further comprises: determining, by the terminal, the second DRX pattern from a DRX pattern set based on the first indication information, wherein the DRX pattern set includes a plurality of different DRX patterns.

In combination with the first aspect, in some implementations of the first aspect, the method further comprises: receiving, by the terminal, configuration information sent by the network device, wherein the configuration information is used to configure the DRX pattern set for the terminal.

In combination with the first aspect, in some implementations of the first aspect, the method further comprises: receiving, by the terminal, second indication information sent by the network device and indicating a time period during which the second DRX pattern is used; wherein switching, by the terminal, between the DRX sleeping period and the DRX active period with the second DRX pattern comprises: switching, by the terminal, between the DRX sleeping period and the DRX active period with the second DRX pattern during the time period.

In combination with the first aspect, in some implementations of the first aspect, the method further comprises: switching, by the terminal, between the DRX sleeping period and the DRX active period with the first DRX pattern after the time period.

In combination with the first aspect, in some implementations of the first aspect, the method further comprises: switching, by the terminal, between the DRX sleeping period and the DRX active period with any one of following DRX patterns after the time period: the first DRX pattern, a pre-configured DRX pattern and a default DRX pattern under protocols.

In combination with the first aspect, in some implementations of the first aspect, the method further comprises: receiving, by the terminal, third indication information sent by the network device and used to instruct the terminal to stop switching between the DRX sleeping period and the DRX active period with the second DRX pattern; stopping, by the terminal, switching between the DRX sleeping period and the DRX active period with the second DRX pattern.

In combination with the first aspect, in some implementations of the first aspect, the method further comprises: switching, by the terminal, between the DRX sleeping period and the DRX active period with any one of following DRX patterns: the first DRX pattern, a pre-configured DRX pattern and a default DRX pattern under protocols.

In combination with the first aspect, in some implementations of the first aspect, the method further comprises: receiving, by the terminal, fourth indication information sent by the network device and indicating at least one of the following: service type information applicable to the second DRX pattern, bearer type information applicable to the second DRX pattern, logical channel information applicable to the second DRX pattern and HARQ process information applicable to the second DRX pattern.

While instructing the second DRX pattern to the terminal, the network device may also instruct the following to the terminal: service type information applicable to the second DRX pattern, bearer type information applicable to the second DRX pattern, logical channel information applicable to the second DRX pattern and HARQ process information applicable to the second DRX pattern, so that the terminal can determine a corresponding DRX pattern as the second DRX pattern based on the service type information applicable to the second DRX pattern, the bearer type information applicable to the second DRX pattern, the logical channel information applicable to the second DRX pattern and the HARQ process information applicable to the second DRX pattern.

In combination with the first aspect, in some implementations of the first aspect, transmission time required for transmitting uplink data and/or downlink data.

The duration of the DRX sleeping period and/or the duration the DRX active period of the DRX patterns are determined based on factors such as service requirement of transmission service between the network device and the terminal, coding and decoding time required for transmitting data, or the like. As such, the transmission requirement of the service quality can be met while reducing power consumption of the terminal's battery by using the discontinuous reception.

In combination with the first aspect, in some implementations of the first aspect, the service attribute corresponding to downlink data to be transmitted comprises a time interval of transmitting the downlink data to be transmitted; the service quality corresponding to downlink data to be transmitted comprises a delay requirement of transmitting the downlink data to be transmitted.

In combination with the first aspect, in some implementations of the first aspect, receiving, by the terminal, indication information sent by a network device comprises: receiving, by the terminal, downlink data carrying the switch indication information and sent by the network device.

In combination with the first aspect, in some implementations of the first aspect, the downlink data may be any one of the following: the downlink data transmitted in a Protocol Data Unit (PDU) of Media Access Control (MAC) layer, the downlink data transmitted in a Protocol Data Unit (PDU) of Radio Link Control (RLC) layer, the downlink data transmitted in a Protocol Data Unit (PDU) of Packet Data Convergence Protocol (PDCP) layer and the downlink data transmitted through a downlink control channel.
In a second aspect, there is provided a method for discontinuous reception, comprising: sending, by a network device, switch indication information to a terminal, which is used to instruct the terminal to switch from a first discontinuous reception DRX pattern currently being used to a second DRX pattern, wherein the first DRX pattern and the second DRX pattern indicate a duration of a DRX sleeping period and a duration of a DRX active period; sending, by the network device, downlink data to the terminal when the terminal is in the duration of the DRX active period with the second DRX pattern, wherein the duration of the DRX sleeping period and/or the duration of the DRX active period are determined based on at least one of the following: service quality or a service attribute corresponding to downlink data to be transmitted; time required for encoding uplink and/or downlink data; or time required for decoding uplink and/or downlink data.

The terminal may switch the DRX pattern in real time based on the switch indication information of the network device and may switch between the DRX sleeping period and the DRX active period with different DRX patterns, thereby improving the flexibility of the terminal in communicating with the network device using the DRX working mechanism.

In combination with the second aspect, in some implementations of the second aspect, the method further comprises: sending, by the network device, first indication information indicating the second DRX pattern to the terminal.

In combination with the second aspect, in some implementations of the second aspect, the method further comprises: sending, by the network device, second indication information, which indicates a time period during which the terminal uses the second DRX pattern, to the terminal.

In combination with the second aspect, in some implementations of the second aspect, the method further comprises: sending, by the network device, third indication information to the terminal, which is used to instruct the terminal to stop switching between the DRX sleeping period and the DRX active period with the second DRX pattern.

In combination with the second aspect, in some implementations of the second aspect, the method further comprises: sending, by the network device, fourth indication information indicating at least one of the following to the terminal: service type information applicable to the second DRX pattern, bearer type information applicable to the second DRX pattern, logical channel information applicable to the second DRX pattern and HARQ process information applicable to the second DRX pattern.

While instructing the second DRX pattern to the terminal, the network device may also instruct the following to the terminal: service type information applicable to the second DRX pattern, bearer type information applicable to the second DRX pattern, logical channel information applicable to the second DRX pattern and HARQ process information applicable to the second DRX pattern, so that the terminal may determine a corresponding DRX pattern as the second DRX pattern based on the service type information applicable to the second DRX pattern, the bearer type information applicable to the second DRX pattern, the logical channel information applicable to the second DRX pattern and the HARQ process information applicable to the second DRX pattern.

In combination with the second aspect, in some implementations of the second aspect, the duration of the DRX sleeping period and/or the duration of the DRX active period are determined based on at least one of the following: service quality or a service attribute corresponding to downlink data to be transmitted; time required for encoding uplink and/or downlink data; time required for decoding uplink and/or downlink data; transmission time required for transmitting uplink data and/or downlink data.

The duration of the DRX sleeping period and/or the duration of the DRX active period of the DRX patterns are determined based on factors such as service requirement of transmission service between the network device and the terminal, coding and decoding time required for transmitting data, or the like. As such, the transmission requirement of the service quality can be met while reducing power consumption of the terminal's battery by using discontinuous reception.

In combination with the second aspect, in some implementations of the second aspect, the service attribute corresponding to downlink data to be transmitted comprises a time interval of transmitting the downlink data to be transmitted, and the service quality corresponding to downlink data to be transmitted comprises a delay requirement of transmitting the downlink data to be transmitted.

In combination with the second aspect, in some implementations of the second aspect, sending, by the network device, indication information to a terminal comprises: sending, by the network device, the downlink data carrying the switch indication information to the terminal.

In combination with the second aspect, in some implementations of the second aspect, the downlink data may be any one of the following: the downlink data transmitted in a Protocol Data Unit (PDU) of Media Access Control (MAC) layer, the downlink data transmitted in a Protocol Data Unit (PDU) of Radio Link Control (RLC) layer, the downlink data transmitted in a Protocol Data Unit (PDU) of Packet Data Convergence Protocol (PDCP) layer and the downlink data transmitted through a downlink control channel.

In a third aspect, there is provided an apparatus for discontinuous reception, comprising a memory, a processor and a transceiver, wherein the memory is used for storing instructions, and the processor is used for performing instructions, and wherein when the instructions are performed, the processor performs methods in the first aspect based on the transceiver.

In a fourth aspect, there is provided an apparatus for discontinuous reception, comprising a memory, a processor and a transceiver; wherein the memory is used for storing instructions, and the processor is used for performing instructions, and wherein when the instructions are performed, the processor performs methods in the second aspect based on the transceiver.

### BRIEF DESCRIPTION OF THE DRAWINGS

FIG. 1 illustrates a radio communication system 100 to which embodiments of the present disclosure are applied.
FIG. 2 is a flow chart of a method for discontinuous reception according to an embodiment of the present disclosure.
FIG. 3 is a schematic diagram of a DRX pattern according to an embodiment of the present disclosure.
FIG. 4 is a flow chart of a method for discontinuous reception according to another embodiment of the present disclosure.
FIG. 5 is a block diagram of an apparatus for discontinuous reception according to an embodiment of the present disclosure.
FIG. 6 is a block diagram of an apparatus for discontinuous reception according to another embodiment of the present disclosure.
FIG. 7 is a block diagram of discontinuous reception according to further another embodiment of the present disclosure.
FIG. 8 is a block diagram of discontinuous reception according to further another embodiment of the present disclosure.

### DETAILED DESCRIPTION

The description of the technical solution in embodiments of the present disclosure will be made with reference to the drawings in the following.

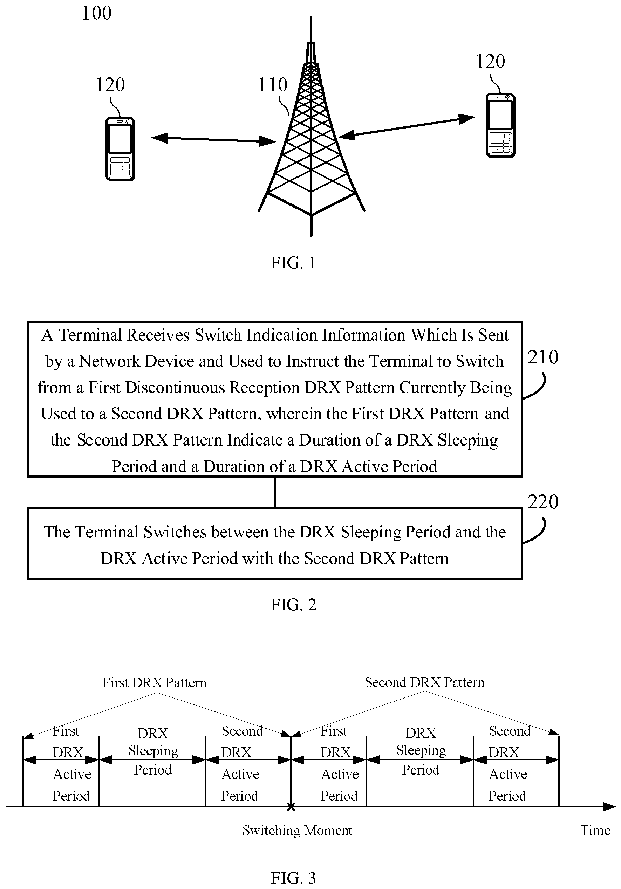

FIG. 1 illustrates a radio communication system 100 to which embodiments of the present disclosure is applied. The radio communication system 100 may include a network device 110. The network device 110 may be a device that communicates with a terminal device. The network device 100 may provide communication coverage for a particular geographic area and may communicate with terminal devices located within the coverage area.

FIG. 1 exemplarily illustrates a network device and two terminals. The radio communication system 100 may include a plurality of network devices and may include other numbers of terminals within the coverage of each network device. This is not specifically restricted in embodiments of the present disclosure.

The radio communication system 100 may also include other network entities such as a network controller, a mobility management entity and so on. This is not specifically restricted in embodiments of the present disclosure.

It should be understood that the technical solution of the present disclosure may be applied to various communication systems, such as a Global System of Mobile communication (GSM) system, a Code Division Multiple Access (CDMA) system, a Wideband Code Division Multiple Access (WCDMA) system, a General Packet Radio Service (GPRS), a Long Term Evolution (LTE) system, an Advanced Long Term Evolution (LTE-A) system, a Universal Mobile Telecommunication System (UMTS), a NR (New Radio Access Technology), 5G or the like.

It should also be understood that, in embodiments of the present disclosure, the terminal device may include but is not limited to a Mobile Station (MS), a Mobile Terminal, a Mobile Telephone, a User Equipment (UE), a handset, a portable equipment and so on. The terminal device may communicate with one or more core networks via a Radio Access Network (RAN). The terminal device may be a mobile phone (or also called as a "cellular" phone), a computer with a radio communication function and so on. The terminal device may also be a mobile device which is portable, pocket-sized, handheld, computer-integrated or on-board.

In embodiments of the present disclosure, a network device may be an access network device, such as a base station, a Transmitting and Receiving Point (TRP) or an access point. The base station may be a Base Transceiver Station (BTS) of GSM or CDMA, and may also be a NodeB of WCDMA, an evolved Node B (eNB or e-NodeB) of LTE, or a gNB of NR or 5G. This is not specifically restricted in embodiments of the present disclosure.

FIG. 2 is a flow chart of a method for discontinuous reception according to an embodiment of the present disclosure. The method as illustrated in FIG. 2 includes the following steps.

At 210, a terminal receives switch indication information which is sent by a network device and used to instruct the terminal to switch from a first discontinuous reception DRX pattern currently being used to a second DRX pattern, wherein the first DRX pattern and the second DRX pattern indicate a duration of a DRX sleeping period and a duration of a DRX active period.

It should be noted that the first DRX pattern and/or the second DRX pattern may be a DRX pattern pre-configured for the terminal by the network device or a default DRX pattern under protocols. It may also be a DRX pattern which is instructed to the terminal by the network device. This is not specifically restricted in embodiments of the present disclosure.

The first DRX pattern and the second DRX pattern indicates in the invention the duration of the DRX sleeping period and the duration of the DRX active period during the first DRX active period to the terminal.

The terminal takes the start time of the DRX transmission with the first DRX pattern as the sending time at which the terminal sends uplink data.

Specifically, the DRX transmission by the terminal with the first DRX pattern is triggered by the terminal sending uplink data.

Specifically, the first DRX active period may be the DRX active period during which the terminal performs DRX transmission periodically with technologies in the prior art. That is, when the terminal is in the DRX active period in a manner of combining a timer with a DRX period using technologies in the prior art, the terminal may switch between the DRX sleeping period and the DRX active period with the DRX patterns, so that the terminal switches between the DRX sleeping period and the DRX active period during the first DRX active period so as to further reduce the power consumption.

At 220, the terminal switches between the DRX sleeping period and the DRX active period with the second DRX pattern.

FIG. 3 is a schematic diagram of a DRX pattern according to an embodiment of the present disclosure. It can be seen from the DRX transmission mechanism shown in FIG. 3 that the terminal performs DRX transmission with the first DRX pattern, the terminal switches from the first DRX pattern to the second DRX pattern at a switching moment, and the terminal performs DRX transmission with the second DRX pattern after the switching moment.

It should be understood that the switching moment may be a moment when the terminal receives the switch indication information sent by the network device, or may be a moment when a preset time period after the moment when the terminal receives the switch indication information sent by the network device ends. This is not specifically restricted in embodiments of the present disclosure.

It should be noted that the first DRX pattern includes a first DRX active period, a DRX sleeping period and a second DRX active period. The duration of the first DRX active period included in the first DRX pattern, the duration of the DRX sleeping period included in the first DRX pattern, and the duration of the second DRX active period included in the first DRX pattern may be either the same or different. Similarly, the second DRX pattern also includes a first DRX active period, a DRX sleeping period and a second DRX active period. The duration of the first DRX active period included in the second DRX pattern, the duration of the DRX sleeping period included in the second DRX pattern, and the duration of the second DRX active period included in the second DRX pattern may be either the same or different. This is not specifically restricted in embodiments of the present disclosure.

As an embodiment, the method further comprises: receiving, by the terminal, first indication information sent by the network device, which indicates the second DRX pattern.

As an embodiment, the method further comprises: determining, by the terminal, the second DRX pattern from a DRX pattern set based on the first indication information, wherein the DRX pattern set includes a plurality of different DRX patterns.

As an embodiment, the method further comprises: receiving, by the terminal, configuration information sent by the network device, wherein the configuration information is used to configure the DRX pattern set for the terminal.

Specifically, the terminal receives configuration information sent by the network device, wherein the configuration information indicates a DRX pattern set configured for the terminal by the network device and including a plurality of DRX patterns. Sending the first indication information to the terminal by the network device may refer to sending an ID of the DRX pattern to the terminal by the network device. The terminal may choose a DRX pattern from the DRX pattern set based on the ID of the DRX pattern.

As an embodiment, the method further comprises: receiving, by the terminal, second indication information sent by the network device and indicating a time period during which the second DRX pattern is used. Switching, by the terminal, between the DRX sleeping period and the DRX active period with the second DRX pattern comprises: switching, by the terminal, between the DRX sleeping period and the DRX active period with the second DRX pattern during the time period.

Specifically, the time period of the second DRX pattern may refer to the time period during which the terminal switches between the DRX sleeping period and the DRX active period with the second DRX pattern.

It should be noted that, after the time period, the terminal switches between the DRX sleeping period and the DRX active period with the first DRX pattern. Alternatively, the terminal may perform the DRX communication in a manner of combining a timer with the DRX period using technologies in the prior art in the DRX terminal after the time period. This is not specifically restricted in embodiments of the present disclosure.

As an embodiment, the method further comprises: switching, by the terminal, between the DRX sleeping period and the DRX active period with the first DRX pattern after the time period.

Specifically, the first DRX pattern may be a DRX pattern preconfigured by the network device for the terminal, a default DRX pattern under protocols, or a DRX pattern which is instructed to the terminal by the network device. This is not specifically restricted in embodiments of the present disclosure.

As an embodiment, the method further comprises: switching, by the terminal, between the DRX sleeping period and the DRX active period with the second DRX pattern after the time period.

As an embodiment, the method further comprises: receiving, by the terminal, third indication information which is sent by the network device and used to instruct the terminal to stop switching between the DRX sleeping period and the DRX active period with the second DRX pattern; stopping, by the terminal, switching between the DRX sleeping period and the DRX active period with the second DRX pattern.

It should be noted that, the terminal may switch between the DRX sleeping period and the DRX active period with the first DRX pattern after the terminal receives the third indication information sent by the network device, and the terminal may also perform DRX communication in a manner of combining a timer with the DRX period using technologies in the prior art in the DRX terminal after the time period. This is not specifically restricted in embodiments of the present disclosure.

As an embodiment, the method further comprises: switching, by the terminal, between the DRX sleeping period and the DRX active period with the first DRX pattern.

As an embodiment, the method further comprises: receiving, by the terminal, fourth indication information which is sent by the network device and indicates at least one of the following: service type information applicable to the second DRX pattern, bearer type information applicable to the second DRX pattern, logical channel information applicable to the second DRX pattern and HARQ process information applicable to the second DRX pattern.

In the invention, the duration of the DRX sleeping period and/or the duration of the DRX active period are determined based on at least one of the following: service quality or a service attribute corresponding to downlink data to be transmitted; time required for encoding uplink and/or downlink data; time required for decoding uplink and/or downlink data. As an embodiment, the determination may in addition be based on the transmission time required for transmitting uplink data and/or downlink data.

In the invention and specifically, the duration of the DRX sleeping period and/or the duration of the DRX active period as indicated by the DRX pattern (including the first DRX pattern and/or the second DRX pattern) are determined based on at least one of the following: service quality or a service attribute corresponding to downlink data to be transmitted; time required for encoding uplink and/or downlink data; time required for decoding uplink and/or downlink data. As an embodiment, the determination may in addition be based on the transmission time required for transmitting uplink data and/or downlink data.

The service quality corresponding to downlink data to be transmitted comprises a delay requirement of transmitting downlink data to be transmitted and the like. The service attribute corresponding to downlink data to be transmitted comprises a time interval of transmitting downlink data to be transmitted and the like.

As an embodiment, receiving, by a terminal, switch indication information sent by a network device comprises: receiving, by the terminal, downlink data carrying the switch indication information sent by the network device.

Specifically, the downlink data may be service data or data of a downlink control channel. When the downlink data are service data, the service data may be any one of the following: downlink data transmitted in a Protocol Data Unit (PDU) of Media Access Control (MAC) layer, downlink data transmitted in a Protocol Data Unit (PDU) of Radio Link Control (RLC) layer, and downlink data transmitted in a Protocol Data Unit (PDU) of Packet Data Convergence Protocol (PDCP) layer.

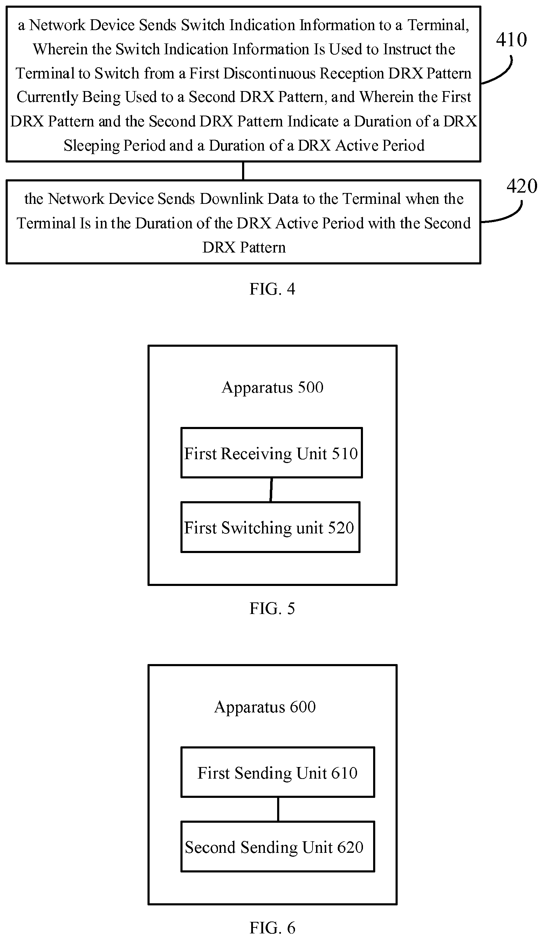

FIG. 4 is a flow chart of a method for discontinuous reception according to another embodiment of the present disclosure. The method as illustrated in FIG. 4 includes the following steps.

At 410, a network device sends switch indication information to a terminal, wherein the switch indication information is used to instruct the terminal to switch from a first discontinuous reception DRX pattern currently being used to a second DRX pattern, and wherein the first DRX pattern and the second DRX pattern indicate a duration of a DRX sleeping period and a duration of a DRX active period.

At 420, the network device sends downlink data to the terminal when the terminal is in the duration of the DRX active period with the second DRX pattern.

As an embodiment, the method further comprises: sending, by the network device, first indication information indicating the second DRX pattern to the terminal.

As an embodiment, the method further comprises: sending, by the network device, second indication information to the terminal, wherein the second indication information indicates a time period during which the terminal uses the second DRX pattern.

As an embodiment, the method further comprises: sending, by the network device, third indication information to the terminal, which is used to instruct the terminal to stop switching between the DRX sleeping period and the DRX active period with the second DRX pattern.

As an embodiment, the method further comprises: sending, by the network device, fourth indication information indicating at least one of the following to the terminal: service type information applicable to the second DRX pattern, bearer type information applicable to the second DRX pattern, logical channel information applicable to the second DRX pattern and HARQ process information applicable to the second DRX pattern.

As an embodiment, the duration of the DRX sleeping period and/or the duration of the DRX active period are determined based on at least one of the following: service quality or a service attribute corresponding to downlink data to be transmitted; time required for encoding uplink and/or downlink data; time required for decoding uplink and/or downlink data; transmission time required for transmitting uplink data and/or downlink data.

As an embodiment, sending, by a network device, switch indication information to a terminal comprises: sending, by the network device, the downlink data carrying the switch indication information to the terminal.

As an embodiment, the downlink data may be any one of the following: downlink data transmitted in a Protocol Data Unit (PDU) of Media Access Control (MAC) layer, downlink data transmitted in a Protocol Data Unit (PDU) of Radio Link Control (RLC) layer, downlink data transmitted in a Protocol Data Unit (PDU) of Packet Data Convergence Protocol (PDCP) layer and downlink data transmitted through a downlink control channel.

Detailed description of the method for discontinuous reception according to embodiments of the present disclosure is made in the above with reference to FIGS. 1-4. Detailed description of the apparatuses for discontinuous reception according to embodiments of the present disclosure will be made as below with reference to FIGS. 5-8. It should be understood that the apparatus illustrated in FIGS. 5-8 can implement the various steps in FIG. 2, which will not be described in detail to avoid repetition.

FIG. 5 is a block diagram of an apparatus for discontinuous reception according to an embodiment of the present disclosure. The apparatus 500 illustrated in FIG. 5 comprises: a first receiving unit 510 and a first switching unit 520.

The first receiving unit 510 is configured to receive switch indication information sent by a network device. The switch indication information is used to instruct the terminal to switch from a first discontinuous reception DRX pattern currently being used to a second DRX pattern. The first DRX pattern and the second DRX pattern indicate a duration of a DRX sleeping period and a duration of a DRX active period;

The first switching unit 520 is configured to switch between the DRX sleeping period and the DRX active period with the second DRX pattern.

As an embodiment, the apparatus further comprises a second receiving unit configured to receive first indication information sent by the network device. The first indication information indicates the second DRX pattern.

As an embodiment, the apparatus further comprises a determining unit configured to determine the second DRX pattern from a DRX pattern set comprising a plurality of different DRX patterns based on the first indication information.

As an embodiment, the apparatus further comprises a third receiving unit configured to receive configuration information sent by the network device, wherein the configuration information is used to configure the DRX pattern set for the terminal.

As an embodiment, the apparatus further comprises a fourth receiving unit configured to receive second indication information sent by the network device, wherein the second indication information indicates a time period during which the second DRX pattern is used. The first switching unit is further configured to switch between the DRX sleeping period and the DRX active period with the second DRX pattern during the time period.

As an embodiment, the apparatus further comprises a second switching unit configured to switch, by the terminal, between the DRX sleeping period and the DRX active period with the first DRX pattern after the time period.

As an embodiment, the apparatus further comprises a third switching unit configured to switch, by the terminal, between the DRX sleeping period and the DRX active period with any one of the following DRX patterns after the time period: the first DRX pattern, a pre-configured DRX pattern and a default DRX pattern under protocols.

As an embodiment, the apparatus further comprises: a fifth receiving unit configured to receive third indication information which is sent by the network device and used to instruct the terminal to stop switching between the DRX sleeping period and the DRX active period with the second DRX pattern; a stopping unit configured to stop switching between the DRX sleeping period and the DRX active period with the second DRX pattern.

As an embodiment, the apparatus further comprises a fourth switching unit configured to switch between the DRX sleeping period and the DRX active period with any one of the following DRX patterns: the first DRX pattern, a pre-configured DRX pattern and a default DRX pattern under protocols.

As an embodiment, the apparatus further comprises a sixth receiving unit configured to receive fourth indication information which is sent by the network device and indicates at least one of the following: service type information applicable to the second DRX pattern, bearer type information applicable to the second DRX pattern, logical channel information applicable to the second DRX pattern and HARQ process information applicable to the second DRX pattern.

In the invention, the duration of the DRX sleeping period and/or the duration of the DRX active period are determined based on at least one of the following information: service quality or a service attribute corresponding to downlink data to be transmitted; time required for encoding uplink and/or downlink data; time required for decoding uplink and/or downlink data. As an embodiment, the determination may in addition be based on the transmission time required for transmitting uplink data and/or downlink data.

As an embodiment, the service attribute corresponding to downlink data to be transmitted comprises a time interval of transmitting the downlink data to be transmitted, and the service quality corresponding to downlink data to be transmitted comprises a delay requirement of transmitting the downlink data to be transmitted.

As an embodiment, the first receiving unit is specifically configured to receive downlink data carrying the switch indication information and sent by the network device.

As an embodiment, the downlink data may be any one of the following: downlink data transmitted in a Protocol Data Unit (PDU) of Media Access Control (MAC) layer, downlink data transmitted in a Protocol Data Unit (PDU) of Radio Link Control (RLC) layer, downlink data transmitted in a Protocol Data Unit (PDU) of Packet Data Convergence Protocol (PDCP) layer and downlink data transmitted through a downlink control channel.

FIG. 6 is a block diagram of an apparatus for discontinuous reception according to another embodiment of the present disclosure. The apparatus 600 illustrated in FIG. 6 comprises: a first sending unit 610 and a second sending unit 620.

The first sending unit 610 is configured to send switch indication information to a terminal, wherein the switch indication information is used to instruct the terminal to switch from a first discontinuous reception DRX pattern currently being used to a second DRX pattern, and wherein the first DRX pattern and the second DRX pattern indicate a duration of a DRX sleeping period and a duration of a DRX active period;

The second sending unit 620 is configured to send downlink data to the terminal when the terminal is in the duration of the DRX active period with the second DRX pattern.

As an embodiment, the apparatus further comprises a third sending unit configured to send first indication information indicating the second DRX pattern to the terminal.

As an embodiment, the apparatus further comprises a fourth sending unit configured to send second indication information to the terminal, which indicates a time period during which the terminal uses the second DRX pattern.

As an embodiment, the apparatus further comprises a fifth sending unit configured to send third indication information to the terminal, which is used to instruct the terminal to stop switching between the DRX sleeping period and the DRX active period with the second DRX pattern.

As an embodiment, the apparatus further comprises a sixth sending unit configured to send fourth indication information indicating at least one of the following to the terminal: service type information applicable to the second DRX pattern, bearer type information applicable to the second DRX pattern, logical channel information applicable to the second DRX pattern and HARQ process information applicable to the second DRX pattern.

In the invention, the duration of the DRX sleeping period and/or the duration of the DRX active period are determined based on at least one of the following information: service quality or a service attribute corresponding to downlink data to be transmitted; time required for encoding uplink and/or downlink data; time required for decoding uplink and/or downlink data. As an embodiment, the determination may in addition be based on the transmission time required for transmitting uplink data and/or downlink data.

As an embodiment, the service attribute corresponding to downlink data to be transmitted comprises a time interval of transmitting the downlink data to be transmitted, and the service quality corresponding to downlink data to be transmitted comprises a delay requirement of transmitting the downlink data to be transmitted.

As an embodiment, the first sending unit is specifically configured to send the downlink data carrying the switch indication information to the terminal.

As an embodiment, the downlink data may be any one of the following: downlink data transmitted in a Protocol Data Unit (PDU) of Media Access Control (MAC) layer, downlink data transmitted in a Protocol Data Unit (PDU) of Radio Link Control (RLC) layer, downlink data transmitted in a Protocol Data Unit (PDU) of Packet Data Convergence Protocol (PDCP) layer and downlink data transmitted through a downlink control channel.

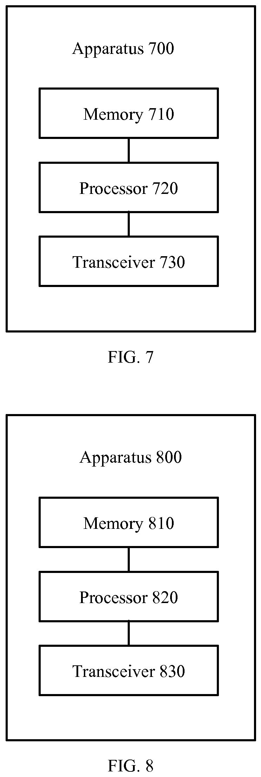

FIG. 7 is a block diagram of discontinuous reception according to another embodiment of the present disclosure. The apparatus 700 illustrated in FIG. 7 comprises a memory 710, a processor 720 and a transceiver 730, wherein the memory 710 is used to store a program, and the processor 720 is configured to perform the program. When the program is performed, the transceiver 730 is configured to receive switch indication information which is sent by a network device and used to instruct the terminal to switch from a first discontinuous reception DRX pattern currently being used to a second DRX pattern. The first DRX pattern and the second DRX pattern indicate a duration of a DRX sleeping period and a duration of a DRX active period. The processor 720 is configured to switch between the DRX sleeping period and the DRX active period with the second DRX pattern.

As an embodiment, the transceiver is configured to receive first indication information which is sent by the network device and indicates the second DRX pattern.

As an embodiment, the processor is configured to determine the second DRX pattern from a DRX pattern set comprising a plurality of different DRX patterns based on the first indication information.

As an embodiment, the transceiver is configured to receive configuration information sent by the network device, wherein the configuration information is used to configure the DRX pattern set for the terminal.

As an embodiment, the transceiver is configured to receive the second indication information sent by the network device, wherein the second indication information indicates a time period during which the second DRX pattern is used. The processor is further configured to switch between the DRX sleeping period and the DRX active period with the second DRX pattern during the time period.

As an embodiment, the processor is configured to switch, by the terminal, between the DRX sleeping period and the DRX active period with the first DRX pattern after the time period.

As an embodiment, the processor is configured to switch, by the terminal, between the DRX sleeping period and the DRX active period with any one of the following DRX patterns after the time period: the first DRX pattern, a pre-configured DRX pattern and a default DRX pattern under protocols.

As an embodiment, the transceiver is configured to receive third indication information which is sent by the network device and used to instruct the terminal to stop switching between the DRX sleeping period and the DRX active period with the second DRX pattern;

a stopping unit is configured to stop switching between the DRX sleeping period and the DRX active period with the second DRX pattern.

As an embodiment, the processor is configured to switch between the DRX sleeping period and the DRX active period with any one of the following DRX patterns: the first DRX pattern, a pre-configured DRX pattern and a default DRX pattern under protocols.

As an embodiment, the transceiver is configured to receive fourth indication information which is sent by the network device and indicates at least one of the following: service type information applicable to the second DRX pattern, bearer type information applicable to the second DRX pattern, logical channel information applicable to the second DRX pattern and HARQ process information applicable to the second DRX pattern.

In the invention, the duration of the DRX sleeping period and/or the duration of the DRX active period are determined based on at least one of the following information: service quality or a service attribute corresponding to downlink data to be transmitted; time required for encoding uplink and/or downlink data; time required for decoding uplink and/or downlink data. As an embodiment, the determination may in addition be based on transmission time required for transmitting uplink data and/or downlink data.

As an embodiment, the service attribute corresponding to downlink data to be transmitted comprises a time interval of transmitting the downlink data to be transmitted, and the service quality corresponding to downlink data to be transmitted comprises a delay requirement of transmitting the downlink data to be transmitted.

As an embodiment, the transceiver is specifically configured to receive downlink data sent by the network device, wherein the downlink data carries the switch indication information.

As an embodiment, the downlink data may be any one of the following: downlink data transmitted in a Protocol Data Unit (PDU) of Media Access Control (MAC) layer, downlink data transmitted in a Protocol Data Unit (PDU) of Radio Link Control (RLC) layer, downlink data transmitted in a Protocol Data Unit (PDU) of Packet Data Convergence Protocol (PDCP) layer and downlink data transmitted through a downlink control channel.

FIG. 8 is a block diagram of discontinuous reception according to another embodiment of the present disclosure. The apparatus 800 illustrated in FIG. 8 comprises a memory 810, a processor 820 and a transceiver 830, wherein the memory 810 is used to store a program, and the processor 820 is configured to perform the program. When the program is performed, the transceiver 830 is configured to send switch indication information to a terminal, wherein the switch indication information is used to instruct the terminal to switch from a first discontinuous reception DRX pattern currently being used to a second DRX pattern, and wherein the first DRX pattern and the second DRX pattern indicate a duration of a DRX sleeping period and a duration of a DRX active period. The transceiver 830 is configured to send downlink data to the terminal when the terminal is in the duration of the DRX active period with the second DRX pattern.

As an embodiment, the transceiver is configured to send first indication information indicating the second DRX pattern to the terminal.

As an embodiment, the transceiver is configured to send second indication information to the terminal, which indicates a time period during which the terminal uses the second DRX pattern.

As an embodiment, the transceiver is configured to send third indication information to the terminal, wherein the third indication information is used to instruct the terminal to stop switching between the DRX sleeping period and the DRX active period with the second DRX pattern.

As an embodiment, the transceiver is configured to send fourth indication information indicating at least one of the following to the terminal: service type information applicable to the second DRX pattern, bearer type information applicable to the second DRX pattern, logical channel information applicable to the second DRX pattern and HARQ process information applicable to the second DRX pattern.

In the invention, the duration of the DRX sleeping period and/or the duration of the DRX active period are determined based on at least one of the following information: service quality or a service attribute corresponding to downlink data to be transmitted; time required for encoding uplink and/or downlink data; time required for decoding uplink and/or downlink data. As an embodiment, the determination may in addition be based on the transmission time required for transmitting uplink data and/or downlink data.

As an embodiment, the service attribute corresponding to downlink data to be transmitted comprises a time interval of transmitting the downlink data to be transmitted, and the service quality corresponding to downlink data to be transmitted comprises a delay requirement of transmitting the downlink data to be transmitted.

As an embodiment, the transceiver is specifically configured to send the downlink data carrying the switch indication information to the terminal.

As an embodiment, the downlink data may be any one of the following: downlink data transmitted in a Protocol Data Unit (PDU) of Media Access Control (MAC) layer, downlink data transmitted in a Protocol Data Unit (PDU) of Radio Link Control (RLC) layer, downlink data transmitted in a Protocol Data Unit (PDU) of Packet Data Convergence Protocol (PDCP) layer and downlink data transmitted through a downlink control channel.

It should be understood that, in embodiments of the present disclosure, "B corresponding to A" represents that B is associated with A, and B can be determined based on A. It should also be understood that determining B based on A not only means that B is determined based only on A, but also means that B can be determined based on A and/or other information.

It should be understood that the term "and/or" used herein is merely an association relationship describing associated objects, which indicates that there may three kinds of relationship. "A and/or B" may indicate these three cases: A exists separately, A and B exist simultaneously, and B exists separately. In addition, the character "/" used herein generally indicates that the relationship between the two objects is "or".

It should be understood that, in various embodiments of the present disclosure, the sequence numbers of the above processes do not indicate the order of performance. The order of performance of each process should be determined based on its function and internal logic, and should not be taken as any limitation of implementation processes of embodiments of the present disclosure.

It should be understood that, in several embodiments of the present disclosure, the disclosed systems, apparatuses and methods may be implemented in other manners. The apparatus embodiments described above are merely illustrative. The division of units is only a division of logical functions, which may be a different division in actual implementations. Multiple units or components may be combined or integrated into another system, or some features may be omitted or not be performed. In addition, the couplings or direct couplings or communication connections between each other as shown or discussed may be indirect couplings or communication connections through some interfaces, devices or units, and may also be electrical, mechanical or otherwise.

The units illustrated as separate components may be or may not be physically separated. The components displayed as units may be or may not be physical units, that is, they may be located in one place, or may be distributed on multiple network units. Some or all of the units may be chosen based on actual needs to achieve the purpose of solutions of embodiments.

In addition, individual functional units of each embodiment of the present disclosure may be integrated into one processing unit, or may exist separately in physics, or two or more units may be integrated into one unit.

The functions may be stored in a computer readable storage medium if implemented in the form of a software function unit and sold or used as an independent product. Based on such an understanding, the technical solution of the present disclosure which contributes to the state of the art in essence, or part of the technical solution, may be embodied in the form of a software product. This computer software product is stored in a storage medium, including several instructions which are used to cause a computer device (which may be a personal computer, a server or a network device, etc.) to perform all or part of the steps of the method as described in various embodiments of the present disclosure. The storage medium described above includes various medium in which may store program codes such as a USB flash disk, a mobile hard disk, a ROM (Read-Only Memory), a RAM (Random Access Memory), a diskette, a CD, or the like.

## Claims

1. A method for discontinuous reception, comprising:
receiving (210), by a terminal (120), switch indication information sent by a network device (110) and used to instruct the terminal (120) to switch from a first discontinuous reception DRX pattern being used to a second DRX pattern, wherein each of the first DRX pattern and the second DRX pattern indicates a duration of a DRX sleeping period and a duration of a DRX active period; and
switching (220), by the terminal (120), between the DRX sleeping period and the DRX active period with the second DRX pattern based on the switch indication information,
**characterized in that** the duration of the DRX sleeping period and/or the duration of the DRX active period are determined based on at least one of the following:
service quality or a service attribute corresponding to downlink data to be transmitted; time required for encoding uplink and/or downlink data; or
time required for decoding uplink and/or downlink data.

2. The method of claim 1, further comprising:
receiving, by the terminal (120), first indication information sent by the network device and indicating the second DRX pattern.

3. The method of claim 2, further comprising:
determining, by the terminal (120), the second DRX pattern from a DRX pattern set based on the first indication information, wherein the DRX pattern set includes a plurality of different DRX patterns.

4. The method of claim 3, further comprising:
receiving, by the terminal (120), configuration information sent by the network device, wherein the configuration information is used to configure the DRX pattern set for the terminal.

5. The method of claim 1 or 2, further comprising:
receiving, by the terminal (120), second indication information sent by the network device and indicating a time period during which the second DRX pattern is used;
wherein switching (220), by the terminal (120), between the DRX sleeping period and the DRX active period with the second DRX pattern comprises:
switching, by the terminal (120), between the DRX sleeping period and the DRX active period with the second DRX pattern during the time period.

6. The method of claim 5, further comprising:
switching, by the terminal (120), between the DRX sleeping period and the DRX active period with any one of following DRX patterns after the time period: the first DRX pattern, a pre-configured DRX pattern and a default DRX pattern under protocols.

7. The method of claim 1, further comprising:
receiving, by the terminal (120), third indication information sent by the network device and used to instruct the terminal to stop switching between the DRX sleeping period and the DRX active period with the second DRX pattern;
stopping, by the terminal (120), switching between the DRX sleeping period and the DRX active period with the second DRX pattern based on the third indication information.

8. The method of claim 7, wherein after stopping, by the terminal (120), switching between the DRX sleeping period and the DRX active period with the second DRX pattern based on the third indication information, the method further comprises:
switching, by the terminal (120), between the DRX sleeping period and the DRX active period with any one of following DRX patterns: the first DRX pattern, a pre-configured DRX pattern and a default DRX pattern under protocols.

9. The method of any one of claims 1-8, wherein the duration of the DRX sleeping period and/or the duration of the DRX active period are determined based on:
transmission time required for transmitting uplink data and/or downlink data.

10. The method of any one of claims 1-9, wherein receiving (210), by a terminal (120), switch indication information sent by a network device comprises:
receiving, by the terminal, downlink data carrying the switch indication information and sent by the network device.

11. A method for discontinuous reception, comprising:
sending (410), by a network device (110), switch indication information to a terminal, which is used to instruct the terminal to switch from a first discontinuous reception DRX pattern currently being used to a second DRX pattern, wherein the first DRX pattern and the second DRX pattern indicate a duration of a DRX sleeping period and a duration of a DRX active period; and
sending (420), by the network device (110), downlink data to the terminal when the terminal is in the duration of the DRX active period with the second DRX pattern, **characterized in that** the duration of the DRX sleeping period and/or the duration of the DRX active period are determined based on at least one of the following:
service quality or a service attribute corresponding to downlink data to be transmitted; time required for encoding uplink and/or downlink data; or
time required for decoding uplink and/or downlink data.

12. The method of claim 11, further comprising:
sending, by the network device (110), first indication information indicating the second DRX pattern to the terminal.

13. The method of claim 11 or 12, further comprising:
sending, by the network device (110), second indication information, which indicates a time period during which the terminal uses the second DRX pattern, to the terminal.

14. An apparatus (700) for discontinuous reception, comprising:
a memory (710);
a processor (720); and
a transceiver (730),
wherein the memory (710) is used to store a program code, and the processor (720) is configured to perform the program code, and
wherein, when the program code is performed, the processor (720) is configured to perform a method for discontinuous reception according to any one of claims 1-10 based on the transceiver (730).

15. An apparatus (800) for discontinuous reception, comprising:
a memory (810);
a processor (820); and
a transceiver (830),
wherein the memory (810) is used to store a program code, and the processor (820) is configured to perform the program code, and
wherein, when the program code is performed, the processor (820) is configured to perform a method for discontinuous reception according to any one of claims 11-13 based on the transceiver (830).

## Patentansprüche

1. Verfahren für diskontinuierlichen Empfang, umfassend:
Empfangen (210), durch ein Endgerät (120), von Umschaltanzeigeinformationen, die von einem Netzwerkgerät (110) gesendet werden, und dazu verwendet werden, das Endgerät (120) anzuweisen, von einem verwendeten ersten diskontinuierlichen Empfangs-, DRX, Muster zu einem zweiten DRX-Muster umzuschalten, wobei jedes von dem ersten DRX-Muster und dem zweiten DRX-Muster eine Dauer einer DRX-Schlafperiode und eine Dauer einer DRX-Aktivperiode anzeigt; und
Umschalten (220), durch das Endgerät (120), zwischen der DRX-Schlafperiode und der DRX-Aktivperiode mit dem zweiten DRX-Muster basierend auf den Umschaltanzeigeinformationen,
**dadurch gekennzeichnet, dass** die Dauer der DRX-Schlafperiode und/oder die Dauer der DRX-Aktivperiode basierend auf mindestens einem von dem Folgenden bestimmt werden:
die Dienstqualität oder ein Dienstattribut, das zu übertragenden Downlink-Daten entspricht;
eine Zeit, die zum Codieren von Uplink- und/oder Downlink-Daten benötigt wird; oder
eine Zeit, die zum Decodieren von Uplink- und/oder Downlink-Daten benötigt wird.

2. Verfahren nach Anspruch 1, ferner umfassend:
Empfangen, durch das Endgerät (120), von ersten Anzeigeinformationen, die von dem Netzwerkgerät gesendet wurden und das zweite DRX-Muster anzeigen.

3. Verfahren nach Anspruch 2, ferner umfassend:
Bestimmen, durch das Endgerät (120), des zweiten DRX-Musters aus einem DRX-Mustersatz basierend auf den ersten Anzeigeinformationen, wobei der DRX-Mustersatz mehrere unterschiedliche DRX-Muster aufweist.

4. Verfahren nach Anspruch 3, ferner umfassend:
Empfangen, durch das Endgerät (120), von Konfigurationsinformationen, die von dem Netzwerkgerät gesendet wurden, wobei die Konfigurationsinformationen dazu verwendet werden, den DRX-Mustersatz für das Endgerät zu konfigurieren

5. Verfahren nach Anspruch 1 oder 2, ferner umfassend:
Empfangen, durch das Endgerät (120), von zweiten Anzeigeinformationen, die von dem Netzwerkgerät gesendet wurden, und eine Zeitperiode anzeigen, während der das zweite DRX-Muster verwendet wird;
wobei das Umschalten (220), durch das Endgerät (120), zwischen der DRX-Schlafperiode und der DRX-Aktivperiode mit dem zweiten DRX-Muster umfasst:
Umschalten, durch das Endgerät (120), zwischen der DRX-Schlafperiode und der DRX-Aktivperiode mit dem zweiten DRX-Muster während der Zeitperiode.

6. Verfahren nach Anspruch 5, ferner umfassend:
Umschalten, durch das Endgerät (120), zwischen der DRX-Schlafperiode und der DRX-Aktivperiode nach der Zeitperiode mit einem der folgenden DRX-Muster: dem ersten DRX-Muster, einem vorkonfigurierten DRX-Muster, und einem Standard-DRX-Muster unter Protokollen.

7. Verfahren nach Anspruch 1, ferner umfassend:
Empfangen, durch das Endgerät (120), von dritten Anzeigeinformationen, die von dem Netzwerkgerät gesendet wurden und dazu verwendet werden, das Endgerät anzuweisen, das Umschalten zwischen der DRX-Schlafperiode und der DRX-Aktivperiode mit dem zweiten DRX-Muster zu stoppen;
Stoppen, durch das Endgerät (120), des Umschaltens zwischen der DRX-Schlafperiode und der DRX-Aktivperiode mit dem zweiten DRX-Muster basierend auf den dritten Anzeigeinformationen.

8. Verfahren nach Anspruch 7, wobei nach dem Stoppen, durch das Endgerät (120), des Umschaltens zwischen der DRX-Schlafperiode und der DRX-Aktivperiode mit dem zweiten DRX-Muster basierend auf den dritten Anzeigeinformation das Verfahren ferner umfasst:
Umschalten, durch das Endgerät (120), zwischen der DRX-Schlafperiode und der DRX-Aktivperiode mit einem der folgenden DRX-Muster: dem ersten DRX-Muster, einem vorkonfigurierten DRX-Muster, und einem Standard-DRX-Muster unter Protokollen.

9. Verfahren nach einem der Ansprüche 1 bis 8, wobei die Dauer der DRX-Schlafperiode und/oder die Dauer der DRX-Aktivperiode bestimmt werden basierend auf: eine Übertragungszeit, die zum Übertragen von Uplink-daten und/oder Downlink-Daten benötigt wird.

10. Verfahren nach einem der Ansprüche 1 bis 9, wobei das Empfangen (210), durch ein Endgerät (120), von Umschaltanzeigeinformationen, die von einem Netzwerkgerät gesendet wurden, umfasst:
Empfangen, durch das Endgerät, von Downlink-Daten, die die Umschaltanzeigeinformationen tragen und von dem Netzwerkgerät gesendet wurden.

11. Verfahren für diskontinuierlichen Empfang, umfassend:
Senden (410), durch ein Netzwerkgerät (110), von Umschaltanzeigeinformationen an ein Endgerät, die dazu verwendet werden, das Endgerät anzuweisen, von einem verwendeten ersten diskontinuierlichen Empfangs-, DRX, Muster zu einem zweiten DRX-Muster umzuschalten, wobei das erste DRX-Muster und das zweite DRX-Muster eine Dauer einer DRX-Schlafperiode und eine Dauer einer DRX-Aktivperiode anzeigen; und
Senden (420), durch das Netzwerkgerät (110), von Downlink-Daten an das Endgerät, wenn sich das Endgerät in der Dauer der aktiven DRX-Periode mit dem zweiten DRX-Muster befindet;
**dadurch gekennzeichnet, dass** die Dauer der DRX-Schlafperiode und/oder die Dauer der DRX-Aktivperiode basierend auf mindestens einem von dem Folgenden bestimmt werden:
die Dienstqualität oder ein Dienstattribut, das zu übertragenden Downlink-Daten entspricht;
eine Zeit, die zum Codieren von Uplink- und/oder Downlink-Daten benötigt wird; oder
eine Zeit, die zum Decodieren von Uplink- und/oder Downlink-Daten benötigt wird.

12. Verfahren nach Anspruch 11, ferner umfassend:
Senden, durch das Netzwerkgerät (110), von ersten Anzeigeinformation, die das zweite DRX-Muster anzeigen, an das Endgerät.

13. Verfahren nach Anspruch 11 oder 12, ferner umfassend:
Senden, durch das Netzwerkgerät (110), von zweiten Anzeigeinformationen, die einen Zeitperiode anzeigen, während der das Endgerät das zweite DRX-Muster verwendet, an das Endgerät.

14. Vorrichtung (700) für diskontinuierlichen Empfang, umfassend:
einen Speicher (710);
einen Prozessor (720); und
einen Transceiver (730),
wobei der Speicher (710) dazu verwendet wird, einen Programmcode zu speichern, und der Prozessor (720) dazu ausgelegt ist, den Programmcode auszuführen, und
wobei, wenn der Programmcode ausgeführt wird, der Prozessor (720) dazu ausgelegt ist, ein Verfahren für diskontinuierlichen Empfang gemäß einem der Ansprüche 1 bis 10 basierend auf dem Transceiver (730) durchzuführen.

15. Vorrichtung (800) für diskontinuierlichen Empfang, umfassend:
einen Speicher (810);
einen Prozessor (820); und
ein Transceiver (830),
wobei der Speicher (810) dazu verwendet wird, einen Programmcode zu speichern, und der Prozessor (820) dazu ausgelegt ist, den Programmcode auszuführen, und
wobei, wenn der Programmcode ausgeführt wird, der Prozessor (820) dazu ausgelegt ist, ein Verfahren für diskontinuierlichen Empfang gemäß einem der Ansprüche 11-13 basierend auf dem Transceiver (830) durchzuführen.

## Revendications

1. Procédé de réception discontinue, comprenant les étapes consistant à :
recevoir (210), par un terminal (120), une information d'indication de commutation envoyée par un dispositif de réseau (110) et utilisée pour donner l'instruction au terminal (120) de commuter d'un premier modèle de réception discontinue (DRX) en cours d'utilisation à un second modèle DRX, le premier modèle DRX et le second modèle DRX indiquant chacun une durée d'une période de veille DRX et une durée d'une période active DRX ; et
commuter (220), par le terminal (120), entre la période de veille DRX et la période active DRX avec le second modèle DRX sur la base de l'information d'indication de commutation,
**caractérisé en ce que** la durée de la période de veille DRX et/ou la durée de la période active DRX sont déterminées sur la base d'au moins une des conditions suivantes :
une qualité de service ou un attribut de service qui correspond à des données en liaison descendante à transmettre ;
un temps requis pour coder des données en liaison montante et/ou en liaison descendante ; ou
un temps requis pour décoder des données en liaison montante et/ou en liaison descendante.

2. Procédé selon la revendication 1, comprenant en outre l'étape consistant à :
recevoir, par le terminal (120), une première information d'indication envoyée par le dispositif de réseau et indiquant le second modèle DRX.

3. Procédé selon la revendication 2, comprenant en outre l'étape consistant à :
déterminer, par le terminal (120), le second modèle DRX à partir d'un ensemble de modèles DRX sur la base de la première information d'indication, l'ensemble de modèles DRX incluant une pluralité de modèles DRX différents.

4. Procédé selon la revendication 3, comprenant en outre l'étape consistant à :
recevoir, par le terminal (120), une information de configuration envoyée par le dispositif de réseau, l'information de configuration étant utilisée pour configurer l'ensemble de modèles DRX pour le terminal.

5. Procédé selon la revendication 1 ou 2, comprenant en outre l'étape consistant à :
recevoir, par le terminal (120), une deuxième information d'indication envoyée par le dispositif de réseau et indiquant une période de temps pendant laquelle le second modèle DRX est utilisé ;
la commutation (220), par le terminal (120), entre la période de veille DRX et la période active DRX avec le second modèle DRX, comprenant l'étape consistant à :
commuter, par le terminal (120), entre la période de veille DRX et la période active DRX avec le second modèle DRX pendant la période de temps.

6. Procédé selon la revendication 5, comprenant en outre l'étape consistant à :
commuter, par le terminal (120), entre la période de veille DRX et la période active DRX avec l'un quelconque des modèles DRX suivants après la période de temps : le premier modèle DRX, un modèle DRX préconfiguré et un modèle DRX par défaut selon des protocoles.

7. Procédé selon la revendication 1, comprenant en outre les étapes consistant à :
recevoir, par le terminal (120), une troisième information d'indication envoyée par le dispositif de réseau et utilisée pour donner l'instruction au terminal d'arrêter de commuter entre la période de veille DRX et la période active DRX avec le second modèle DRX ;
arrêter, par le terminal (120), de commuter entre la période de veille DRX et la période active DRX avec le second modèle DRX sur la base de la troisième information d'indication.

8. Procédé selon la revendication 7, le procédé comprenant en outre, après l'arrêt, par le terminal (120), de la commutation entre la période de veille DRX et la période active DRX avec le second modèle DRX sur la base de la troisième information d'indication, l'étape consistant à :
commuter, par le terminal (120), entre la période de veille DRX et la période active DRX avec l'un quelconque des modèles DRX suivants : le premier modèle DRX, un modèle DRX préconfiguré et un modèle DRX par défaut selon des protocoles.

9. Procédé selon l'une quelconque des revendications 1 à 8, dans lequel la durée de la période de veille DRX et/ou la durée de la période active DRX sont déterminées sur la base de : un temps de transmission requis pour transmettre des données en liaison montante et/ou des données en liaison descendante.

10. Procédé selon l'une quelconque des revendications 1 à 9, dans lequel la réception (210), par un terminal (120), d'une information d'indication de commutation envoyée par un dispositif de réseau comprend l'étape consistant à :
recevoir, par le terminal, des données en liaison descendante transportant l'information d'indication de commutation et envoyées par le dispositif de réseau.

11. Procédé de réception discontinue, comprenant les étapes consistant à :
envoyer (410), par un dispositif de réseau (110) à un terminal, une information d'indication de commutation qui est utilisée pour donner l'instruction au terminal de commuter d'un premier modèle de réception discontinue (DRX) actuellement en cours d'utilisation à un second modèle DRX, le premier modèle DRX et le second modèle DRX indiquant une durée d'une période de veille DRX et une durée d'une période active DRX ; et
envoyer (420), par le dispositif de réseau (110), des données en liaison descendante au terminal quand le terminal est dans les limites de la durée de la période active DRX avec le second modèle DRX,
**caractérisé en ce que** la durée de la période de veille DRX et/ou la durée de la période active DRX sont déterminées sur la base d'au moins une des conditions suivantes :
une qualité de service ou un attribut de service qui correspond à des données en liaison descendante à transmettre ;
un temps requis pour coder des données en liaison montante et/ou en liaison descendante ; ou
un temps requis pour décoder des données en liaison montante et/ou en liaison descendante.

12. Procédé selon la revendication 11, comprenant en outre l'étape consistant à :
envoyer, par le dispositif de réseau (110), au terminal, une première information d'indication indiquant le second modèle DRX.

13. Procédé selon la revendication 11 ou 12, comprenant en outre l'étape consistant à :
envoyer, par le dispositif de réseau (110) au terminal, une deuxième information d'indication qui indique une période de temps pendant laquelle le terminal utilise le second modèle DRX.

14. Appareil (700) de réception discontinue, comprenant :
une mémoire (710) ;
un processeur (720) ; et
un émetteur-récepteur (730),
la mémoire (710) étant utilisée pour stocker un code de programme et le processeur (720) étant configuré pour exécuter le code de programme, et
quand le code de programme est exécuté, le processeur (720) étant configuré pour réaliser un procédé de réception discontinue selon l'une quelconque des revendications 1 à 10 sur la base de l'émetteur-récepteur (730).

15. Appareil (800) de réception discontinue, comprenant :
une mémoire (810) ;
un processeur (820) ; et
un émetteur-récepteur (830),
la mémoire (810) étant utilisée pour stocker un code de programme et le processeur (820) étant configuré pour exécuter le code de programme, et
quand le code de programme est exécuté, le processeur (820) étant configuré pour réaliser un procédé de réception discontinue selon l'une quelconque des revendications 11 à 13 sur la base de l'émetteur-récepteur (830).
